(19) Europäisches Patentamt
European Patent Office
Office européen des brevets

(11) **EP 2 910 971 B1**

(12) **EUROPEAN PATENT SPECIFICATION**

(45) Date of publication and mention
of the grant of the patent:
**15.05.2019 Bulletin 2019/20**

(21) Application number: **15156243.6**

(22) Date of filing: **24.02.2015**

(51) Int Cl.:
*G06K 9/00* (2006.01)    *G06K 9/20* (2006.01)
*G06K 9/62* (2006.01)    *G01S 17/02* (2006.01)
*G02B 26/12* (2006.01)   *G01S 17/42* (2006.01)
*G01S 17/93* (2006.01)   *G01S 7/481* (2006.01)
*G01S 11/12* (2006.01)   *G06T 7/521* (2017.01)
*G06T 7/593* (2017.01)   *G01S 17/66* (2006.01)
*G01S 13/93* (2006.01)

(54) **Object recognition apparatus and object recognition method**

Objekterkennungsvorrichtung und Objekterkennungsverfahren

Appareil de reconnaissance d'objet et procédé de reconnaissance d'objet

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2014 JP 2014033078
19.02.2015 JP 2015030514**

(43) Date of publication of application:
**26.08.2015 Bulletin 2015/35**

(73) Proprietor: **Ricoh Company, Ltd.
Tokyo 143-8555 (JP)**

(72) Inventors:
• **Fujimoto, Hideomi**
  **Kanagawa, 222-8530 (JP)**
• **Sekiguchi, Hiroyoshi**
  **Tokyo, 143-8555 (JP)**
• **Guan, Haike**
  **Tokyo, 143-8555 (JP)**
• **Suzuki, Shuichi**
  **Kanagawa, 222-8530 (JP)**
• **Nakajima, Mitsuru**
  **Kanagawa, 222-8530 (JP)**
• **Aoki, Shin**
  **Tokyo, 143-8555 (JP)**
• **Yokota, Soichiro**
  **Tokyo, 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
DE-A1- 10 154 861       GB-A- 2 289 816
US-A1- 2008 002 857     US-A1- 2013 342 657
US-A1- 2014 022 388

• LABAYRADE R ET AL: "A collision mitigation system using laser scanner and stereovision fusion and its assessment", INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6 June 2005 (2005-06-06), pages 441-446, XP010833835, DOI: 10.1109/IVS.2005.1505143 ISBN: 978-0-7803-8961-8
• J. BURKHARD ET AL: "STEREOVISION MOBILE MAPPING: SYSTEM DESIGN AND PERFORMANCE EVALUATION", PROCEEDINGS OF THE XXIIND ISPRS CONGRESS, vol. XXXIX-B5, 25 August 2012 (2012-08-25) , pages 453-458, XP055198698, Melbourne, Australia ISSN: 2194-9034, DOI: 10.5194/isprsarchives-XXXIX-B5-453-2012
• HERNAN BADINO ET AL: "Integrating LIDAR into Stereo for Fast and Improved Disparity Computation", 3D IMAGING, MODELING, PROCESSING, VISUALIZATION AND TRANSMISSION (3DIMPVT), 2011 INTERNATIONAL CONFERENCE ON, IEEE, 16 May 2011 (2011-05-16), pages 405-412, XP031896512, DOI: 10.1109/3DIMPVT.2011.58 ISBN: 978-1-61284-429-9

EP 2 910 971 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## BACKGROUND OF THE INVENTION

1. Field of the Invention

The disclosures herein generally relate to an object recognition apparatus and the like, especially relating to an object recognition apparatus and an object recognition method and the like for detecting a distance to an object and a direction to the object.

2. Description of the Related Art

Conventionally, driving support technologies for recognizing an object such as a vehicle, a pedestrian, an installation object or the like in front of an own vehicle, and reporting a result of the recognition to a driver or controlling the own vehicle have been known. Since travelling environments can greatly change depending on a location, a time period, a region, a climate condition or the like, recognition of an object corresponding to a change in the travelling environment has been required.

However, due to a restriction for a dynamic range of imaging elements, such as CMOS sensors or CCD sensors, used in a camera, an exposure control may not follow a rapid change in brightness and an image processing apparatus may not recognize an object appearing in image data. For example, it may be difficult to recognize the object in the image data in the case where headlights from an oncoming vehicle suddenly enter a camera, or an exit of a tunnel appears within an imaging range.

Japanese Published Patent Application No. 2013-215804 discloses, for example, assisting recognition of an object in a travelling environment, in which it is difficult to recognize the object with a camera, by using a sensor other than the camera. Japanese Published Patent Application No. 2013-215804 discloses an obstacle recognition apparatus that recognizes an object by a stereo-camera and by a scanning laser radar, respectively, and determines whether the object exists by weighting results of recognition according to reliability for each of the ranging devices depending on a surrounding condition.

However, there is a problem that in the case where the camera loses the object due to a rapid change in the travelling environment, since a horizontal resolution of the laser radar is generally lower than a resolution for object detection by the stereo camera, the object cannot always be detected by the laser radar. The above problem will be explained with reference to drawings in the following:

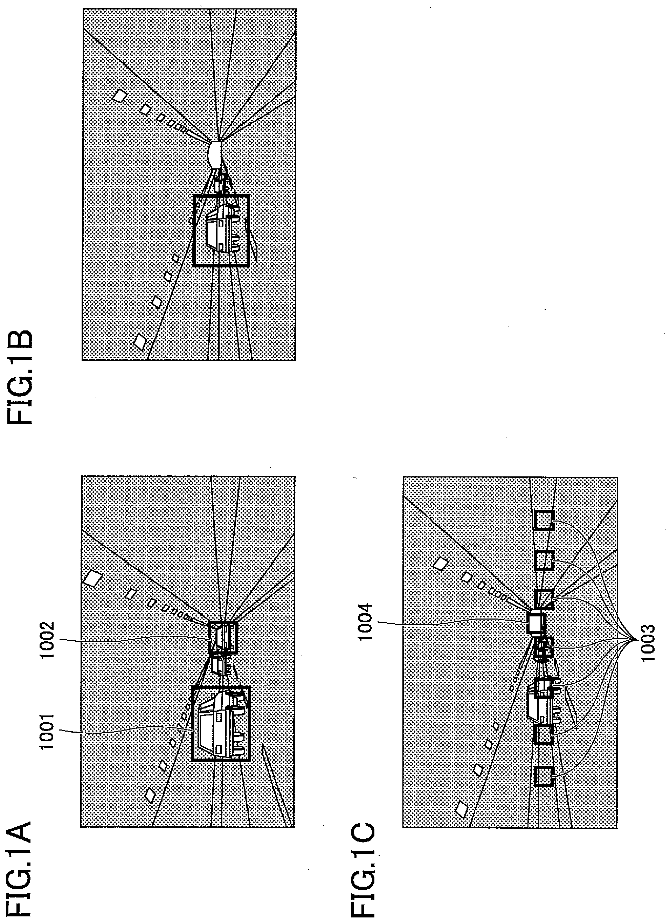

Fig. 1A illustrates an example showing an object recognized by an object recognition apparatus in an image captured by a camera. In Fig. 1A, an own vehicle travels in a tunnel and a preceding vehicle 1001 and a front vehicle 1002 are recognized.

Fig. 1B illustrates an example of an image captured by the camera in the case where a bright light source such as an exit of a tunnel overlaps with the preceding vehicle 1001. A whitening (state in which brightness saturates at a value close to the maximum value and a gradation expression becomes insufficient) occurs by the bright light source, the preceding vehicle 1001 is not distinctly imaged and the object recognition apparatus cannot recognize the preceding vehicle 1001.

In such a travelling environment, a laser radar resistant to backlight may be used for assisting acquiring the preceding vehicle 1001. However, as shown in Fig. 1C, the preceding vehicle 1004 overlapping with backlight does not necessarily exist at an emitted position 1003 by the laser radar. That is, since laser light is emitted discontinuously at equal intervals, the preceding vehicle 1004 on which whitening occurs does not necessarily receive laser light. Accordingly, the conventional laser radar may not be sufficient for assisting a camera to acquire an object.

US 2014/0022388 A1 discloses an airspace surveillance system for the detection of missiles launched within a space being monitored, having at least two surveillance platforms positioned outside or on the edge of the space being monitored in such a manner that the space or a part of the space is situated between the monitoring platforms. Each of the monitoring platforms is equipped with at least one camera system in such a manner that the lines of sight of the camera systems of the two monitoring platforms being positioned opposite to and facing each other.

The document "A collision mitigation system using laser scanner and stereovision fusion and its assessment" by R. Labayrade et al, published in the Proceedings of the Intelligent Vehicles Symposium 2005, June 6-8, 2005, IEEE, pages 441-446, DOI: 10.1109/IVS.2005.1505143, ISBN 978-0-7803-8961-8, discloses a vehicle equipped with stereo vision and a laser scanner. A tracking algorithm of an obstacles detection system performs tracking for each sensor and manages appearance, association of targets with tracks, and disappearance of tracks. Once the tracking is done for both sensors, the tracks are fused.

## SUMMARY OF THE INVENTION

The scope of the invention is defined by the appended claims. Any reference to "embodiment(s)", "example(s)" or "aspect(s) of the invention" in this description not falling under the scope of the claims should be interpreted as illustrative example(s) for understanding the invention.

## BRIEF DESCRIPTION OF THE DRAWINGS

Other objects and further features of embodiments will be apparent from the following detailed description when read in conjunction with the accompanying drawings, in which:

Figs. 1A to 1C are diagrams illustrating an example of an image captured by a camera and for explaining the inconvenience in scanning by a laser radar;
Figs. 2A to 2C are diagrams for explaining an example of a schematic operation of an object recognition apparatus according to the present embodiment;
Fig. 3 is a diagram illustrating an example of an overall configuration of the object recognition apparatus according to the present embodiment;
Fig. 4 is a diagram illustrating an example of a schematic configuration of a stereo camera ranging unit according to the present embodiment;
Fig. 5 is a diagram for explaining an example of a principle of triangulation;
Fig. 6 is a diagram illustrating an example of a schematic configuration of a laser radar ranging unit according to the present embodiment;
Fig. 7 is a diagram for explaining an example of an emission angle of laser light emitted at a surface of a polygon mirror according to the present embodiment;
Fig. 8 is a diagram for explaining an example of detecting the disappearance of an object by a recognition disappearance detection unit according to the present embodiment;
Fig. 9 is a diagram for explaining an example of object data acquired by the recognition disappearance detection unit according to the present embodiment;
Figs. 10A to 10C are diagrams for explaining an example of emitted laser lights according to the present embodiment; and
Fig. 11 is a flowchart illustrating an example of a procedure for operation of the object recognition apparatus according to the present embodiment.

## DESCRIPTION OF THE PREFERRED EMBODIMENTS

In the following, embodiments of the present invention will be described with reference to the accompanying drawings.

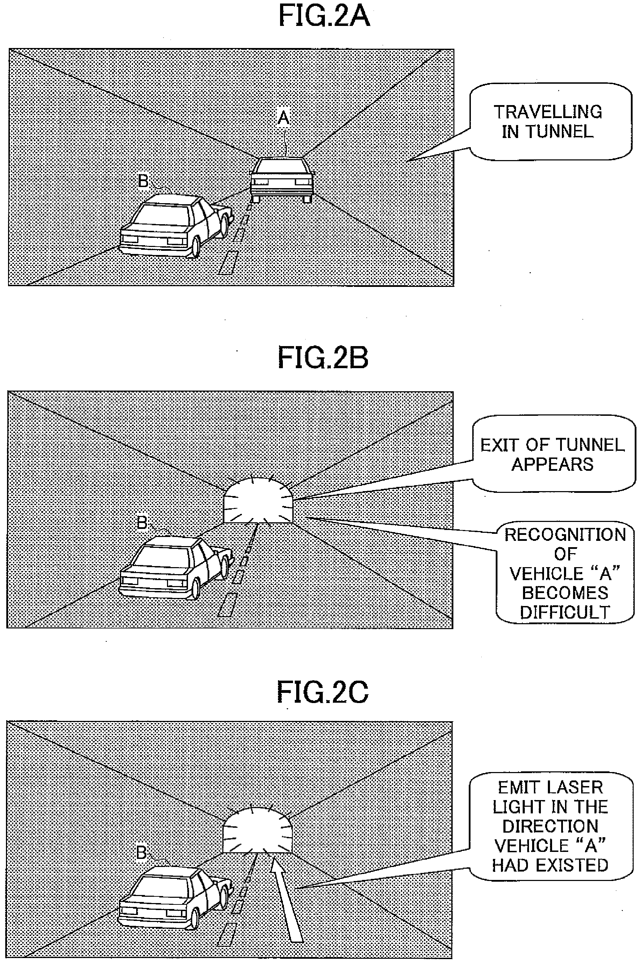

Figs. 2A to 2C are diagrams for explaining an example of a schematic operation of an object recognition apparatus according to the present embodiment. The object recognition apparatus according to the present embodiment controls a scanning position (emission direction) of laser light and emits laser light in the direction of a position of a preceding vehicle which a camera loses, thereby enhancing performance in assisting the camera by the laser radar.

Fig. 2A is a diagram illustrating an example of the operation of the object recognition apparatus. An own vehicle travels in a tunnel. A vehicle "A" and a vehicle "B" are recognized by a camera.

Fig. 2B is a diagram illustrating another example of the operation of the object recognition apparatus. By the preceding vehicle approaching the tunnel or going through, an exit of the tunnel appears in front of the own vehicle. Accordingly, during which the camera controls exposure so as to adapt to the brightness of the exit, whitening occurs and the vehicle "A" becomes unrecognizable (The own vehicle becomes unable to recognize the vehicle "A"). Hereinafter, the phenomenon will be referred to as "disappearance".

Fig. 2C is a diagram illustrating yet another example of the operation of the object recognition apparatus. When the vehicle "A" which has been recognized by the camera disappears, the object recognition apparatus emits laser light in the direction in which the vehicle "A" had been recognized. If the vehicle "A" exists in the direction of emitting laser light, the laser light is reflected, and thereby the object recognition apparatus continues recognizing the vehicle "A".

Accordingly, by pinpoint-emitting laser light in the direction in which the vehicle "A" exists where the camera had recognized until right before, even in the case where the horizontal resolution of the laser radar is low, it is possible to assist the camera to recognize the vehicle "A" and to support driving.

[Example of configuration]

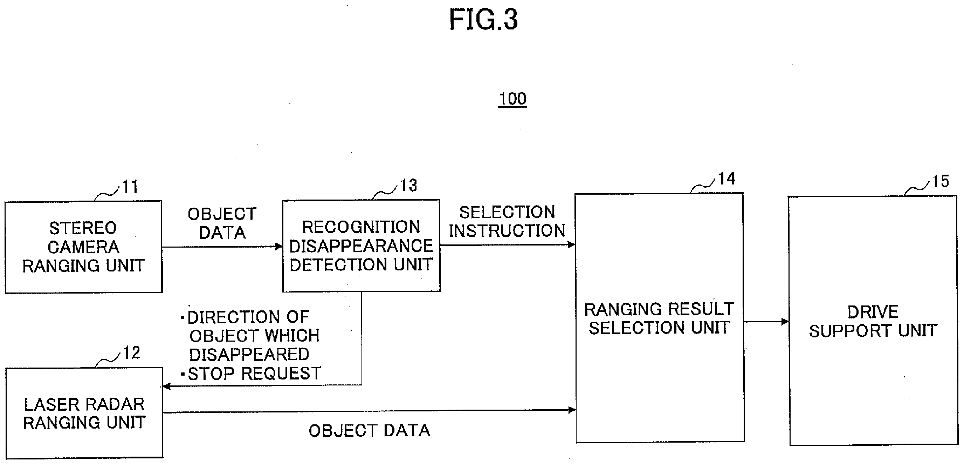

Fig. 3 illustrates an example of an overall configuration diagram of the object recognition apparatus 100. The object recognition apparatus 100 includes a stereo camera ranging unit 11, a laser radar ranging unit 12, a recognition disappearance detection unit 13, a ranging result selection unit 14 and a drive support unit 15.

The stereo camera ranging unit 11 captures a forward area including an object by using two or more cameras, and detects a distance for each pixel from parallax data. The process will be described later in detail. The stereo camera ranging unit 11 outputs object data (distance, position or the like) of the object recognized by analyzing an image to the ranging result selection unit 14 via the recognition disappearance detection unit 13. The position is an example of the direction information.

The recognition disappearance detection unit 13 detects that the object, which the stereo camera ranging unit 11 has recognized, becomes unrecognizable, i.e. the object disappears. At this time, an emission request for laser light and a direction to the disappeared object, which had been recognized before the disappearance, are sent to the laser radar ranging unit 12.

The laser radar ranging unit 12 emits laser light, and detects a distance to the object based on a time length from an emission of the laser light till a reception of the laser light reflected at the object. The process will be described later in detail. The laser radar ranging unit 12 outputs detected object data (distance, position or the like) of the object to the ranging result selection unit 14.

The ranging result selection unit 14 determines whether to output the object data from the stereo camera ranging unit 11 or the object data from the laser radar ranging unit 12 to the drive support unit 15, and output the selected data. The stereo camera ranging unit 11 can output two dimensional object data with high resolution, since image sensors such as CMOS sensors or CCD sensors are used as light reception elements. However, the laser radar ranging unit 12 outputs the object data with low spatial resolution. Accordingly, the ranging result selection unit 14 essentially outputs the object data from the stereo camera ranging unit 11 to the drive support unit 15 in preference to the object data from the laser radar ranging unit 12. Exceptionally, when the recognition disappearance detection unit 13 detects that the object disappears, the object data from the laser radar ranging unit 12 are output. Meanwhile, in the case where the recognition disappearance detection unit 13 cannot recognize the object, the ranging result selection unit 14 may output both object data from the stereo camera ranging unit 11 and from the laser radar ranging unit 12.

The drive support unit 15 performs various drive supports by using the object data from the stereo camera ranging unit 11 or from the laser radar ranging unit 12. The drive support varies depending on a vehicle. For example, in the case where a position of the object overlaps with an extended line of a vehicle width, warning, braking or the like is performed according TTC (Time To Collision). Moreover, in the case where it is difficult to stop before collision, the own vehicle is steered to an opposite direction so as to avoid the collision.

Moreover, the drive support unit 15 performs a vehicle distance control over the entire vehicle speed, by which the own vehicle travels following a preceding vehicle with a vehicle distance depending on the vehicle speed. When the preceding vehicle stops, the own vehicle stops. When the preceding vehicle starts, the own vehicle starts. Moreover, in the case where the stereo camera ranging unit 11 performs white line recognition, the drive support unit 15 performs a lane keeping control for steering the own vehicle so as to travel in the center of the lane.

Moreover, in the case where there is an obstacle in the traveling direction when the own vehicle stops, sudden starting is inhibited. For example, in the case where there is an obstacle in the traveling direction, which is determined from an operation position of a shift lever and the operation amount of an accelerator pedal is great, damage is reduced by restricting an engine output or by warning.

Meanwhile, in the case where there are plural objects in front of the own vehicle, object data of the plural objects from the stereo camera ranging unit 11 or from the laser radar ranging unit 12 may be input to the drive support unit 15. In this case, the drive support unit 15 performs drive support for the object having the highest probability of collision. The object has, for example, the horizontal position within a threshold range of the own vehicle and has the least TTC.

[Configuration and principle of stereo camera ranging unit]

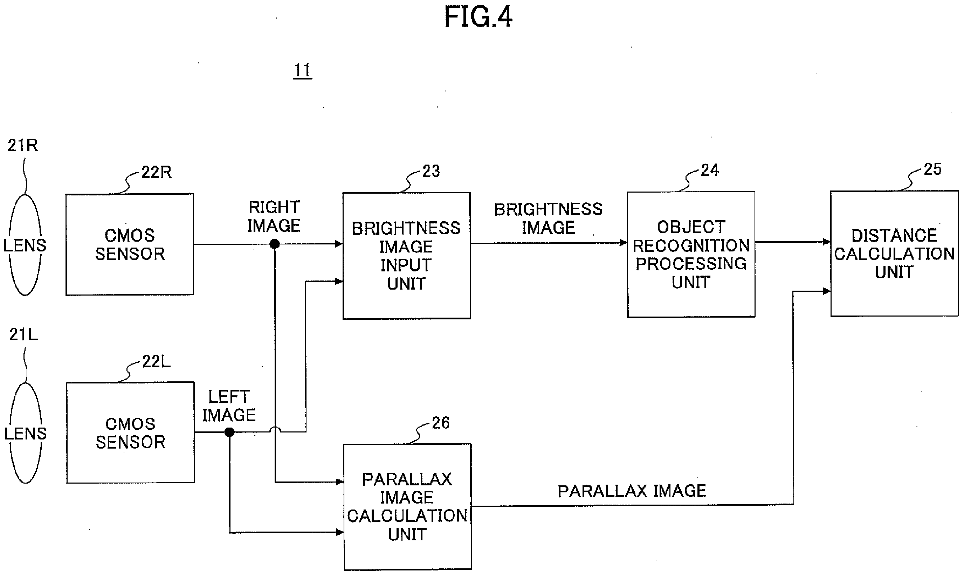

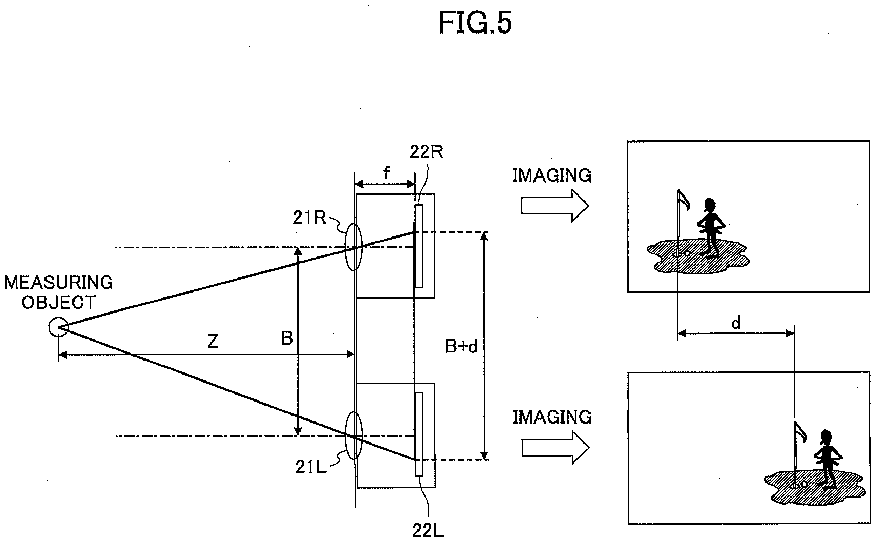

Fig. 4 illustrates an example of a schematic configuration diagram of the stereo camera ranging unit 11. Fig. 5 illustrates an example of a diagram for explaining a principle of triangulation. The stereo camera ranging unit 11 includes lenses 21R, 21L, two CMOS sensors 22R, 22L which are arranged with a predetermined distance (base-line length), a brightness image input unit 23, a parallax image calculation unit 26, an object recognition processing unit 24 and a distance calculation unit 25. The left and right CMOS sensors 22R, 22L periodically output captured images, respectively. A right image captured by the right CMOS sensor 22R and a left image captured by the left CMOS sensor 22L are input to the brightness image input unit 23 and to the parallax image calculation unit 26.

The brightness image input unit 23 extracts a brightness image from the right image or the left image and outputs it. For example, a predetermined one of the right image and the left image, an image with better image quality of the right image and the left image (for example, with better contrast or greater edge number), or an overlapped part of the right image and the left image is extracted.

The object recognition processing unit 24 recognizes the object from the brightness image. The object in the present embodiment is mainly a vehicle, a pedestrian, a bicycle or the like. However, the present invention is not limited to this. A stationary object, such as a traffic light, may be recognized. Recognition of the object is performed, for example, by a matching of the brightness image with a block image of a vehicle or the like for pattern recognition which is prepared in advance. An image region of nearly the same velocity may be specified by an optical flow or the like in advance, a matching region may be narrowed and an appropriate block image for pattern recognition may be selected according to its aspect ratio. A time to recognize the object can be shortened compared with the matching of the whole screen. Meanwhile, since the brightness image is output periodically, the object which is once recognized to be a vehicle can be tracked in the next image based on a recognition position in the present image.

The parallax image calculation unit 26 calculates, using the right image and the left image as shown in Fig. 5, a difference between positions of the same object on the CMOS sensors 22R, 22L as a parallax, and outputs a parallax image. The parallax image and the brightness image are synchronized with each other, and coordinates in both images correspond to each other. For example, the right image is divided into blocks, and a region of the left image where pixel values most closely match with the block in the right image (with the same size as the block) is determined. A difference in the horizontal direction between positions of the block in the right image and the region in the left image is the parallax d. Meanwhile, though the parallax d can be calculated for each pixel, the parallax d may be calculated for each pixel block. A region in which the same object is imaged in one image has almost the same parallax.

When the base-line length is B, a distance to the object is Z and a focal length is f, a distance between images of the same object appearing on the left and right CMOS sensors 22R, 22L is B+d (See Fig. 5).

The distance calculation unit 25 calculates the distance to a measuring object from the parallax image. When the respective distances are defined as shown in Fig. 5, the distance Z to a photographic subject, which is the object, can be calculated using the following formula:

$$Z : B = Z+f : B+d \quad -> \quad Z = Bf / d.$$

A position in a real space can be calculated from a position (pixel) in the image, in which the object is captured, and the focal length f. Moreover, since the distance Z is calculated, a direction can be obtained from the position.

Meanwhile, in the present embodiment, a stereo camera will be exemplified as an imaging means for detecting distance information. However, the imaging means may be a camera such as a monocular TOF camera in which a part of pixels are used for detecting a distance or a monocular camera which calculates a parallax by comparing plural frames on the basis that a camera moves. Since for the monocular camera, a calibration process or the like is unnecessary, a cost can be reduced.

Moreover, although the stereo camera is installed in a vehicle so as to image a front area of the vehicle, the stereo camera may be installed so that not only the front area but also a rear area, a rear side area or the like can be imaged.

[Configuration and principle of laser radar ranging unit]

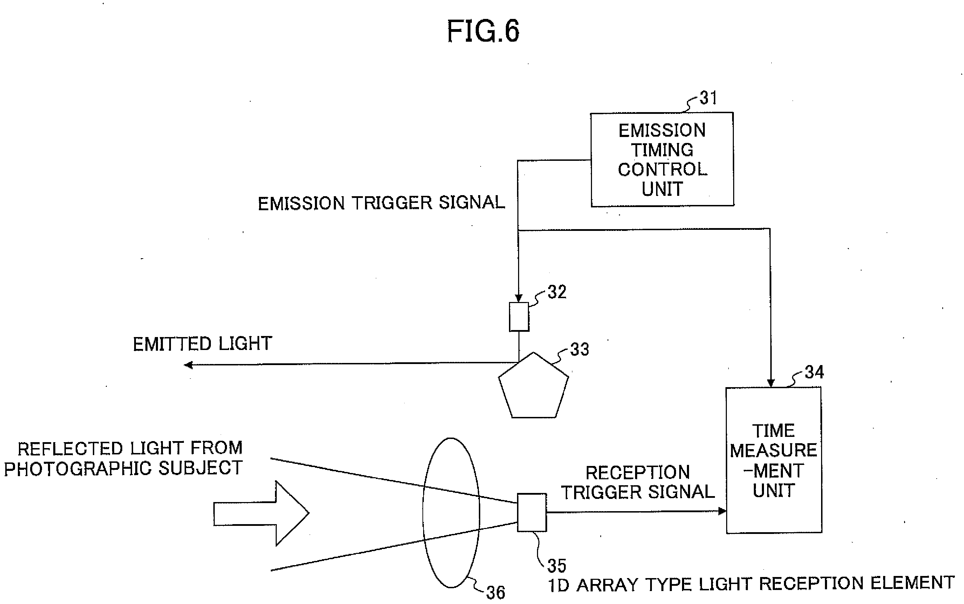

Fig. 6 illustrates an example of a schematic configuration diagram of the laser radar ranging unit 12. The laser radar ranging unit 12 emits pulsed laser light from a laser diode 32 and receives a reflected light from the object. A distance to the object is obtained by measuring a time length from an emission of laser light till a reception of the laser light. Moreover, a position can be calculated from a direction of the emission of the laser light and the obtained distance.

An emission timing control unit 31 controls a timing at which the laser diode 32 emits laser light. Conventionally, the emission timing control unit 31 is not provided, or even if it is provided laser light is merely emitted periodically. The emission timing control unit 31 according to the present embodiment causes the laser diode 32 to emit laser light periodically by an emission trigger signal. Furthermore, the emission timing can be controlled arbitrarily.

Meanwhile, the periodic laser light may be emitted always in the fixed direction. Furthermore, though it is periodic, the emission direction may vary according to an angle of a polygon mirror 33 when the laser diode 32 emits light.

Laser light emitted from the laser diode 32 is reflected at the polygon mirror 33 and emitted. Since the polygon mirror 33 rotates at a predetermined rotating speed, there are plural laser lights with various angles in the horizontal direction for respective surfaces of the polygon mirror 33.

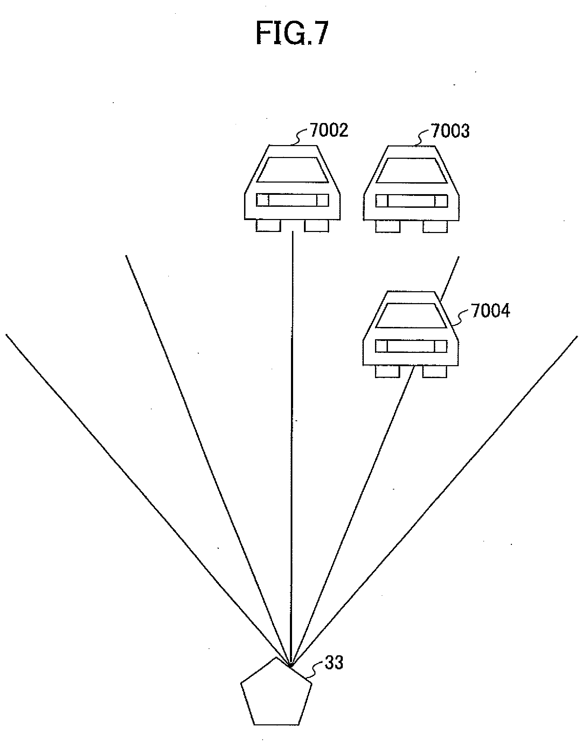

Fig. 7 illustrates an example of a diagram for explaining the emission angle of laser light emitted at a surface of the polygon mirror 33. When the polygon mirror 33 is a pentahedron, a time length which one surface faces to the laser diode 32 is a time length required for the polygon mirror 32 rotating by 72 (=360/5) degrees. By the emission timing control unit 31 emitting the emission trigger signal, for example, five times within the above time length, laser light can be emitted while changing the direction by 72/5, i.e. about 15 degrees.

The laser light reflected at the polygon mirror 33, afterwards reaches the object and is reflected. The reflected light is collected by a lens 36 and received by a ID (dimensional) array type light reception element 35. The ID array type light reception element 35 includes light reception elements which are arranged one dimensionally in the horizontal direction. A direction to the object can be detected depending on which light reception element in the horizontal direction detects laser light greater than or equal to a threshold.

Meanwhile, in the case of detecting the direction to the object according to the timing at which the laser diode 32 emits laser light and the angle of the polygon mirror 33, the 1D array type light reception element 35 outputs a reception trigger signal indicating that laser light is received to a time measurement unit 34. The 1D array type light reception element 35 is preferably sensitive to a wavelength of the laser light.

The time measurement unit 34 measures a time length from a timing at which the emission trigger signal for laser light is input till a timing at which a reception trigger signal is input, and calculates the distance to the object based on the measured time length and the velocity of light.

In order to receive the reflected light by the 1D array type light reception element 35 as distinguished from light such as the headlights of other vehicles or light from signals (so as to increase an intensity of the reflected light), an emission intensity of the laser diode 32 is preferably great. However, since when the emission intensity is increased, the laser diode is degraded by itself, a pulse interval of predetermined time length according to the emission intensity is required. As a result, there is a problem that the pulse interval increases and higher resolution in the horizontal direction cannot be obtained.

For example, as shown in Fig. 7, in the case where only five laser lights can be emitted in the horizontal direction for each surface of the polygon mirror 33, a preceding vehicle 7002 right in front of the own vehicle can be detected by radar light, but a preceding vehicle 7003 deviated from an emission position of laser light is not detected. In the case where the preceding vehicle comes close to the own vehicle and exists at a position of a preceding vehicle 7004, for example, probability of detection increases. However, the shortening of the distance increases a risk of a delay of an appropriate drive support. Accordingly, in detection of an object by using laser light, it is preferable to detect a distant preceding vehicle 7003 rather than waiting for an other vehicle coming close to the own vehicle.

Thus, the laser radar ranging unit 12 according to the present embodiment is provided with the emission timing control unit 31, which controls a timing of emission of laser light, thereby controlling an emission angle of the laser light. As a result, the emission direction within an angle of view in one dimensional direction (horizontal direction) can be controlled arbitrarily.

Meanwhile, laser light emitted from the laser diode 32 is not limited to visible light. The laser light may include visible light and light other than the visible light. That is, the laser diode 32 has only to emit an electromagnetic wave and to receive it.

Moreover, in the present embodiment, pulsed laser lights are emitted while changing the emission direction, and the ID array type light reception element 35 detects a direction to the object from the emission angle. However, an electromagnetic wave may be emitted while changing the emission direction of the electromagnetic wave without a mechanical movement, such as a phased array antenna, for example.

[About function of recognition disappearance detection unit]

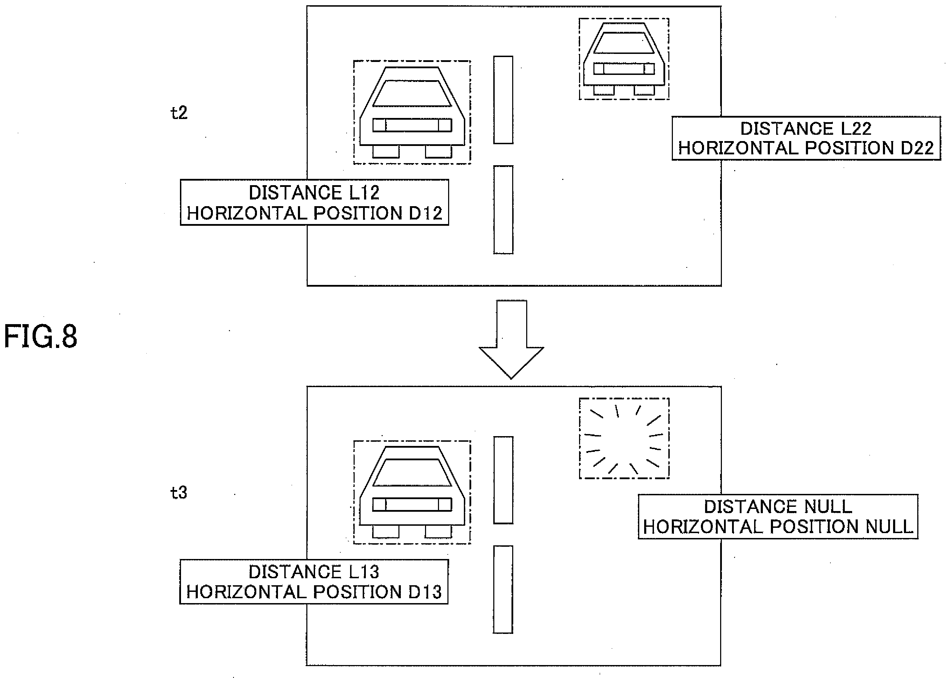

Fig. 8 illustrates an example of a diagram for explaining detecting disappearance of an object by the recognition disappearance detection unit 13. The object recognition processing unit 24 in the stereo camera ranging unit 11 calculates a distance and a position for each of the images, described as above. Meanwhile, the object recognition processing unit 24 calculates relative velocity, for an object detected at almost the same position in an image for a time series of images (images of the object overlap with each other at least in a part), from a difference between distances and from a time interval for capturing the images.

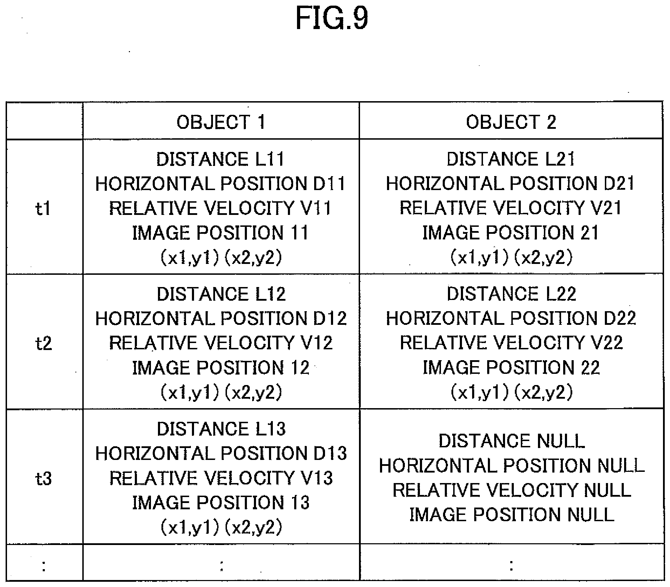

In order to detect disappearance of the object, the stereo camera ranging unit 11 outputs the brightness image to the recognition disappearance detection unit 13 in addition to the object data. Moreover, the recognition disappearance detection unit 13 can acquire a distance, a position, a relative velocity and an image position for each object, as shown in Fig. 9.

Fig. 9 illustrates an example of a table for explaining object data acquired by the recognition disappearance detection unit 13. In the object data, a distance, a position, a relative velocity and an image position are registered in time series associated with an object number (including past data). Meanwhile, image positions (x1, y1), (x2, y2) are coordinates defining diagonal vertexes of a circumscribed rectangle surrounding the object. Numbers t1, t2 and t3 correspond to timings at each of which a brightness image is acquired, and object data detected from the respective brightness images are registered. Meanwhile, here the numbers have values so that tl<t2<t3, but the numbers may have values so that t1>t2>t3.

As shown in Fig. 9, for t1 and t2, distances and the like of both the object 1 and object 2 are detected. However, for t3, distance and the like of the object 2 are not detected. In the present embodiment, "NULL" represents object data of the object that cannot be detected by the stereo camera ranging unit 11. "NULL" is registered in the object data in the case where, for example, the object deviates from an imaging range, the object hides behind an other vehicle or a feature, or whitening occurs.

The recognition disappearance detection unit 13 determines for an object, for which "NULL" is registered in the object data, whether the object disappears due to whitening by referring to the preceding object data. That is, the image position 22 of the object 2 for t2 is read, and it is determined whether whitening occurs at the image position 22 in the brightness image for t3 according to the following procedure, for example:

(i) Variance value of brightness values for pixels in the rectangular region (x1,y1) (x2,y2) is calculated. In the case where the variance value is less than or equal to a threshold, it is determined that whitening occurs. When whitening occurs, according to limiting of the dynamic range, brightness values of a part of the pixels are close to the maximum brightness value, and brightness values of a part of the pixels become smaller. Accordingly, the variance value becomes smaller than that before the whitening occurs. Meanwhile, the threshold is experimentally obtained by calculating variance values for images in which whitening occurs and variance values for images in which whitening does not occur.

(ii) Histogram of brightness values for pixels in the rectangular region (x1,y1) (x2,y2) is calculated. In the case where a ratio of sufficiently bright pixels (for example, greater than or equal to 220 on a scale of 0 to 255) and sufficiently dark pixels (for example, less than or equal to 30 on a scale of 0 to 255) to the whole pixel is greater than or equal to a threshold, it is determined that whitening occurs. The idea is the same as in the above-described example (i). The property that brightness values of a lot of pixels in the rectangular region (x1,y1) (x2,y2) at the image position 22 becomes close to the maximum brightness value is used.

(iii) Brightness values of the pixels in the rectangular region (x1,y1) (x2,y2) at the image position 22 are differentiated in at least one direction of the vertical direction and the horizontal direction. In the case where the sum of differential values is less than or equal to a threshold, it is determined that whitening occurs. When whitening occurs, a difference between pixel values of adjacent pixels becomes smaller. Accordingly, in the case where the sum of the differential values is less than or equal to the threshold, it is determined that whitening occurs.

The recognition disappearance detection unit 13, upon detecting disappearance of the object, reports the direction to the object to the laser radar ranging unit 12. The direction to the object is obtained from the horizontal position and the distance for t2 where a front direction to the vehicle is zero as follows:

$$\text{Direction} = \arcsin(\text{horizontal position}/\text{distance}).$$

Moreover, the recognition disappearance detection unit 13 sends to the ranging result selection unit 14 a selection request to cause to select a detection result by the laser radar ranging unit 12. Thus, the ranging result selection unit 14, using object data by the laser radar ranging unit 12, selects a distance or a direction to an object which disappears from an image and outputs it to the drive support unit 15. Meanwhile, the recognition disappearance detection unit 13 continues to output object data generated by the stereo camera ranging unit 11 to the ranging result selection unit 14. However, the ranging unit selection unit 14 outputs only the object data by the laser radar ranging unit 12. As described above, both object data by the stereo camera ranging unit 11 and object data by the laser radar ranging unit 12 may be input to the ranging result selection unit 14.

Meanwhile, Fig. 9 illustrates object data by the stereo camera ranging unit 11. However, object data by the laser radar ranging unit 12 has the same format as the object data by the stereo camera ranging unit 11 except that an image position is not included. Moreover, data characteristic of the laser radar ranging unit 12 (for example, an emission direction) may be included.

[Timing control by emission timing control unit]

Since the laser radar ranging unit 12 emits radar light in the direction reported from the recognition disappearance detection unit 13, the object which disappears in a brightness image due to whitening can be detected by laser light. Since an emission direction of laser light of the laser diode 32 is fixed, an emission direction of laser light from the vehicle is determined according to an angle between a surface of the polygon mirror 33 and the emission direction of laser light of a radar diode. The emission timing control unit 31 detects, for example, a timing at which an angle between a surface of the polygon mirror 33 and the emission direction of laser light of the radar diode is 90 degrees, counts clocks starting at the timing, and calculates an emission angle of laser light from the vehicle on the basis of a number of clocks. A relation between the number of clocks and an emission angle of laser light from the vehicle is retained in advance. In the case where the calculated emission angle coincides with the direction reported from the recognition disappearance detection unit 13, an emission trigger signal is output to the laser diode 32. The emission timing control unit 31 repeats the above process when the polygon mirror 33 changes a surface.

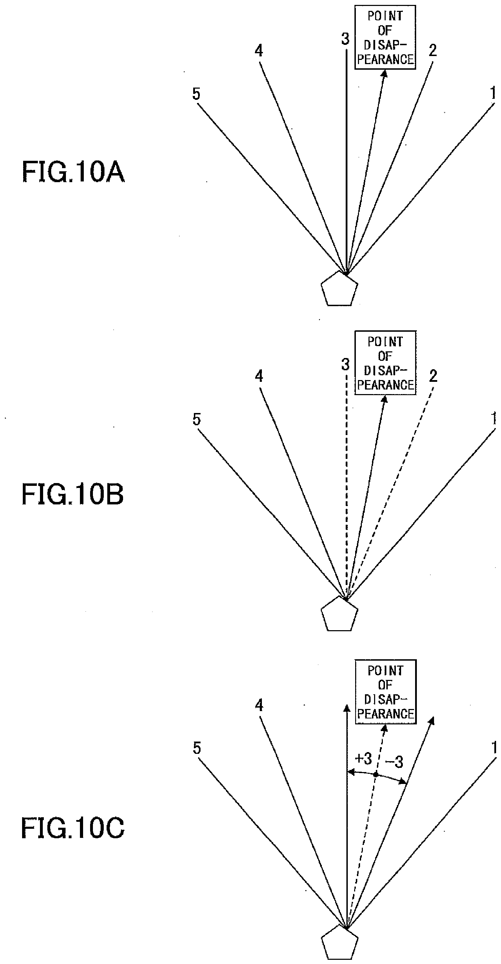

Fig. 10A illustrates an example of a diagram for explaining an emitted laser light. In the present embodiment, laser light is emitted in five directions from one surface of the polygon mirror 33. As shown in Fig. 10A, laser light is emitted in an order of at the first timing, the second timing, a point of disappearance, the third timing, the fourth timing and the fifth timing.

Meanwhile, in the case of being reported a direction to an object that disappears, all the periodic emissions may stop, and laser light may be emitted only in the direction to the point of disappearance.

Moreover, in the case of being reported the direction to the object that disappears, when the laser radar ranging unit 12 continues the periodic emissions of laser light, as shown in Fig. 10A, the laser radar ranging unit 12 is preferable not to emit laser lights before and after the direction to the point of disappearance of the periodic laser lights.

Fig. 10B illustrates an example of a diagram for explaining a laser light in the case where laser light is not emitted before and after the direction to the point of disappearance. In the case where the point of disappearance is between the second direction and the third direction, the emission timing control unit 31 does not output an emission timing signal at the second timing and the third timing. Accordingly, laser light is emitted in an order of at the first timing, the point of disappearance, the fourth timing and the fifth timing. Thus, even if laser light is emitted to the point of disappearance, a time interval for emission can be spaced, and degradation of the laser diode 32 can be prevented.

Meanwhile, in the case where laser light is emitted periodically with a time interval which is sufficiently wide so as not to deteriorate the laser diode 32, laser light may be emitted also at the second timing and the third timing. Accordingly, the resolution in the horizontal direction can be enhanced.

Moreover, laser light may be emitted only at a timing of the second timing and the third timing. For example, in the case where an angle between the direction to the point of disappearance and the emission direction at the third timing is less than or equal to a threshold (sufficiently close to the emission direction at the third timing), even if laser light is emitted in the emission direction at the second timing, degradation of the laser diode 32 can be prevented. Similarly, in the case where an angle between the direction to the point of disappearance and the emission direction at the second timing is less than or equal to the threshold (sufficiently close to the emission direction at the second timing), even if laser light is emitted in the direction at the third timing, degradation of the laser diode 32 can be prevented.

Incidentally, since a relative position between an object of a point of disappearance and the own vehicle can change, the object may become undetectable while laser light is emitted repeatedly in a direction to the point of disappearance. For example, the relative position can change when a preceding vehicle moves horizontally. In this case, the laser radar ranging unit 12 detects the horizontal movement of the preceding vehicle because a reflected wave of the laser light emitted to the point of disappearance is not detected. The emission timing control unit 31 controls the emission trigger signal again so that laser light is emitted in directions before and after in the horizontal direction centering around the direction to the point of disappearance, at an angle of +/- three degrees, for example (i.e. changing an angle leftward and rightward in the horizontal direction), as shown in Fig. 10C. Accordingly, even when the object of the point of disappearance moves horizontally, it is possible to acquire it again.

Meanwhile, in the case where the object cannot be detected even if laser light is emitted at an angle of +/three degrees, by increasing the angle gradually (e.g. by one degree), the object of the point of disappearance can be detected definitely. Meanwhile, in the present embodiment, the maximum emission width for changing the direction back and forth is set within a range which coincides with the periodic emission direction. Further wider range can be covered by the periodic emission.

[Switch from laser radar ranging unit to stereo camera ranging unit]

Next, switch from detection according to laser light to a recognition result based on a brightness image will be explained. When the own vehicle exits from the tunnel following the preceding vehicle and the stereo camera ranging unit 11 becomes possible to recognize the preceding vehicle which had disappeared, the laser radar ranging unit 12 stops emission of laser light in the direction to the point of disappearance. The ranging result selection unit 14 switches to output object data by the stereo camera ranging unit 11.

This switching may be performed in reverse to the switching from the recognition by the stereo camera ranging unit 11 to the detection by the laser radar ranging unit 12. That is, the laser radar ranging unit 12 outputs object data of an object which is detected to the stereo camera ranging unit 11. The stereo camera ranging unit 11 performs object recognition for an object at an image position corresponding to the direction and distance detected according to laser light. In the case where the object is recognized, it is determined that the object, which had disappeared, is recognized by a brightness image again.

The stereo camera ranging unit 11 requires the laser radar ranging unit 12 to stop emission of laser light in the direction to the point of disappearance. Thus, the laser radar ranging unit 12 returns to the operation of the periodic emission of laser light. Moreover, the stereo camera ranging unit 11 requires, via the recognition disappearance detection unit 13, the ranging result selection unit 14 to select object data from the stereo camera ranging unit 11.

[Operation procedure]

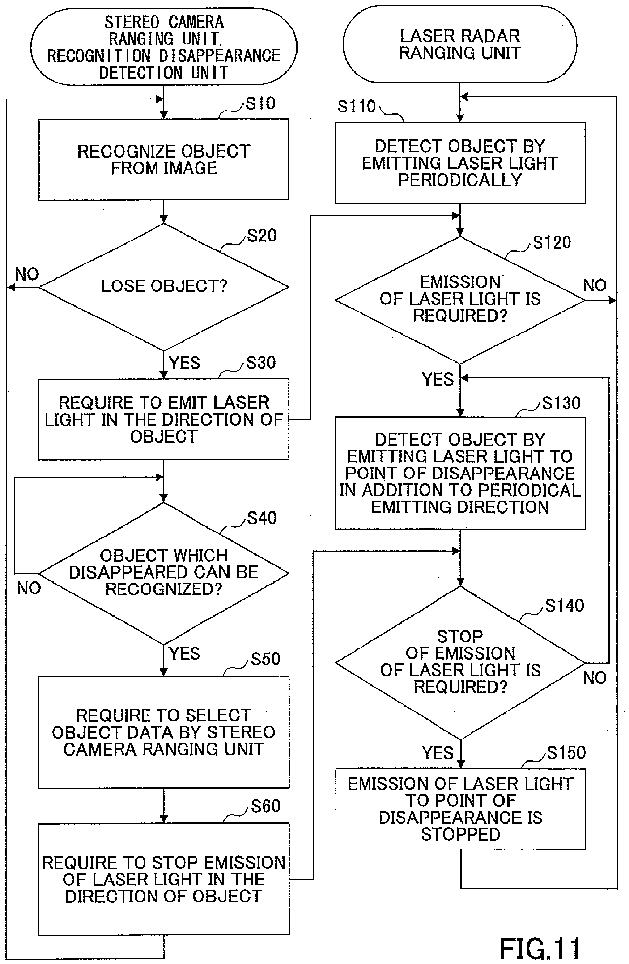

Fig. 11 is an example of a flowchart illustrating an operation procedure of the object recognition apparatus 100. The stereo camera ranging unit 11 performs periodically a process for recognizing an object from an image (step S10).

The recognition disappearance detection unit 13 determines whether the object disappears referring to object data (step S20).

In the case where the object disappears (step S20: YES), the recognition disappearance detection unit 13 requires the laser radar ranging unit 12 to emit laser light in a direction to the object (step S30). Moreover, the recognition disappearance detection unit 13 sends to the ranging result selection unit 14 a selection request to cause to select a detection result by the laser radar ranging unit 12. Meanwhile, even if the recognition disappearance detection unit 13 sends the above request, the stereo camera ranging unit 11 repeats recognition of an object from a brightness image within a recognizable range.

Next, the stereo camera ranging unit 11 determines whether the object which had disappeared can be recognized (step S40) .

In the case where the object which had disappeared can be recognized (step S40: YES), the stereo camera ranging unit 11 requires, via the recognition disappearance detection unit 13, the ranging result selection unit 14 to select object data by the stereo camera ranging unit 11 (step S50). Accordingly, the ranging result selection unit 14 restarts selection of object data by the stereo camera ranging unit 11.

Then, the stereo camera ranging unit 11 outputs to the laser radar ranging unit 12 a stop request to stop emitting laser light in the direction of the object (step S60).

Next, an operation procedure of the laser radar ranging unit 12 will be explained.

The laser radar ranging unit 12 emits laser light periodically and detects an object (step S110).

In the case of receiving a request for emission of laser light to the object which had disappeared (step S120: YES), the laser radar ranging unit 12 detects the object by emitting laser light to the point of disappearance in addition to the periodical emitting direction (step S130).

Next, the laser radar ranging unit 12 determines whether stopping of emission of laser light is required (step S140).

In the case where the stopping of emission of laser light is required (step S140: YES), the laser radar ranging unit 12 stops the emission of laser light to the point of disappearance (step S150).

Accordingly, described as above, the object recognition apparatus 100 according to the present embodiment, for a rapid change in travelling environment, by emitting laser light in a direction to an object, right before the object becomes unrecognizable by the stereo camera, even if a resolution of a laser radar in the horizontal direction is low, can detect the object which had disappeared by the stereo camera.

For example, in the present embodiment, an exit of a tunnel is explained as an example, but the present invention is suitably applicable to a travelling environment in which brightness rapidly changes, such as a case where headlights from an oncoming vehicle suddenly enter a camera, or a case of being suddenly exposed to the afternoon sun.

The present application is based on and claims the benefit of priority of Japanese Priority Applications No. 2014-033078 filed on February 24, 2014, and No. 2015-030514 filed on February 19, 2015.

**Claims**

1. An object recognition apparatus (100), comprising:

   a first object detection unit (11) being a stereo camera ranging unit configured to be installed in a vehicle so as to image at least a front area of the vehicle and to detect an object based on an image of the object captured by the stereo camera, and output first distance information including a distance to the object and first direction information including a direction to the object;
   a second object detection unit (12) being a laser radar ranging unit configured to emit light onto the object, detect the object based on reflected light reflected at the object, and output second distance information including a distance to the object and second direction information including a direction to the object;
   an output unit (14) configured to output at least one of the first distance information and the second distance information and at least one of the first direction information and the second direction information; and a disappearance detection unit (13) configured to detect disappearance of the object when the first object detection unit (11) becomes unable to detect the object; **characterized in that**
   the output unit (14) is configured to output the first distance information and the first direction information in case of receiving the first distance information, the second distance information, the first direction information and the second direction information;

the object recognition apparatus further comprising an emission control unit (31) configured to control the second object detection unit (12), in a case where the disappearance detection unit (13) detects the disappearance, to emit light in an object direction based on the first direction information before the disappearance detection unit (13) detected the disappearance,

wherein upon the disappearance detection unit (13) detecting the disappearance, the output unit (14) starts outputting the second distance information and the second direction information, and when the first object detection unit (11) becomes able to detect the object after the output unit (14) started outputting the second distance information and the second direction information, the output unit (14) starts outputting the first distance information and the first direction information.

2. The object recognition apparatus (100) as claimed in claim 1, wherein the disappearance detection unit detects the disappearance based on pixel values in an imaging range in the image of the object.

3. The object recognition apparatus (100) as claimed in claim 2, wherein the disappearance detection unit (13) detects the disappearance, in a case where a variance value of the pixel values in the imaging range in the image of the object is less than or equal to a threshold.

4. The object recognition apparatus (100) as claimed in any one of claims 1 to 3, wherein in a case where the second object detection unit (12) cannot detect the object with the light emitted in the object direction, the emission control unit controls the second object detection unit (12) to emit light in a direction deviated from the object direction by a predetermined angle.

5. The object recognition apparatus (100) as claimed in any one of claims 1 to 4, wherein the second object detection unit (12) emits light at a periodical timing while changing an emission direction, and in a case where the disappearance detection unit (13) detects the disappearance, the second object detection unit (12) does not emit light at a timing adjacent to a timing for emitting light in the object direction.

6. The object recognition apparatus (100) as claimed in any one of claims 1 to 4, wherein the second object detection unit (12) emits light at a periodical timing while changing an emission direction, and in a case where the disappearance detection unit (13) detects the disappearance, the second object detection unit (12) emits light at the periodical timing, in addition to a timing for emitting light in the object direction.

7. The object recognition apparatus (100) as claimed in any one of claims 1 to 6, wherein the first object detection unit (11) acquires the first distance information and the first direction information based on a plurality of images captured by the stereo camera.

8. An object recognition method, comprising:

detecting (S10) an object based on an image of the object captured by a first object detection unit (11) being a stereo camera ranging unit installed in a vehicle so as to image at least a front area of the vehicle, and outputting first distance information including a distance to the object and first direction information including a direction to the object;

emitting (S110) light onto the object and detecting the object based on reflected light reflected at the object by a second object detection unit (12) being a laser radar ranging unit, and outputting second distance information including a distance to the object and second direction information including a direction to the object;

outputting, using an output unit (14), the first distance information and the first direction information in a case of receiving the first distance information, the second distance information, the first direction information and the second direction information;

detecting (S20), using a disappearance detection unit (13), disappearance of the object upon when the object becomes unable to be detected based on the image of the object captured by the first object detection unit (11); and

emitting (S130) light, in a case where the disappearance is detected, in an object direction based on the first direction information before the disappearance was detected,

wherein upon the disappearance being detected, the second distance information and the second direction information start to be output, and when the first object detection unit (11) becomes able to detect the object after the output unit (14) started outputting the second distance information and the second direction information, the output unit (14) starts outputting the first distance information and the first direction information.

**Patentansprüche**

1. Objekterkennungsvorrichtung (100), enthaltend:

   eine erste Objektdetektionseinheit (11), die eine Stereokameraentfernungsmesseinheit ist, die eingerichtet ist, in einem Fahrzeug so installiert zu werden, dass sie ein Bild von wenigstens einem Frontbereich des Fahrzeugs aufnimmt und ein Objekt basierend auf einem von der Stereokamera aufgenommenen Bild zu detektieren und erste Entfernungsinformationen, die eine Entfernung zu dem Objekt enthalten, und erste Richtungsinformationen, die eine Richtung zu dem Objekt enthalten, auszugeben;
   eine zweite Objektdetektionseinheit (12), die eine Laserradarentfernungsmesseinheit ist, die eingerichtet ist, Licht auf das Objekt zu emittieren, das Objekt basierend auf reflektiertem Licht, das an dem Objekt reflektiert wird, zu detektieren und zweite Entfernungsinformationen, die eine Entfernung zu dem Objekt enthalten, und zweite Richtungsinformationen, die eine Richtung zu dem Objekt enthalten, auszugeben;
   eine Ausgabeeinheit (14), die eingerichtet ist wenigstens eines von den ersten Entfernungsinformationen und den zweiten Entfernungsinformation und wenigstens eines von den ersten Richtungsinformationen und den zweiten Richtungsinformationen auszugeben; und
   eine Verschwindedetektionseinheit (13), die eingerichtet ist ein Verschwinden des Objekts zu detektieren, wenn die erste Objektdetektionseinheit (11) das Objekt nicht mehr detektieren kann;

   **dadurch gekennzeichnet, dass**
   die Ausgabeeinheit (14) eingerichtet ist, die ersten Entfernungsinformationen und die ersten Richtungsinformationen auszugeben, wenn die ersten Entfernungsinformationen, die zweiten Entfernungsinformationen, die ersten Richtungsinformationen und die zweiten Richtungsinformationen erhalten werden;
   wobei die Objekterkennungsvorrichtung ferner eine Emissionssteuereinheit (31) enthält, die eingerichtet ist, die zweite Objektdetektionseinheit (12) zu steuern, wenn die Verschwindedetektionseinheit (13) das Verschwinden detektiert, Licht in eine Objektrichtung basierend auf den ersten Richtungsinformation zu emittieren, bevor die Verschwindedektionseinheit (13) das Verschwinden detektierte,
   wobei dann, wenn die Verschwindedetektionseinheit (13) das Verschwinden detektiert, die Ausgabeeinheit (14) damit beginnt, die zweiten Entfernungsinformationen und die zweiten Richtungsinformationen auszugeben, und wenn die erste Objektdetektionseinheit (11) das Objekt nicht mehr detektieren kann, die Ausgabeeinheit (14) begann, die zweiten Entfernungsinformationen und die zweiten Richtungsinformationen auszugeben, die Ausgabeeinheit (14) damit beginnt, die ersten Entfernungsinformationen und die ersten Richtungsinformationen auszugeben.

2. Objekterkennungsvorrichtung (100) wie in Anspruch 1 beansprucht, bei der die Verschwindedetektionseinheit das Verschwinden basierend auf Pixelwerten in einem Bildgebungsbereich in dem Bild des Objekts detektiert.

3. Objekterkennungsvorrichtung (100) wie in Anspruch 2 beansprucht, bei der die Verschwindedetektionseinheit (13) das Verschwinden detektiert, wenn ein Varianzwert der Pixelwerte in dem Bildgebungsbereich in dem Bild des Objekts kleiner als ein oder gleich einem Schwellwert ist.

4. Objekterkennungsvorrichtung (100), wie in irgendeinem der Ansprüche 1 bis 3 beansprucht, bei der, wenn die zweite Objektdetektionseinheit (12) das Objekt nicht mit dem in der Objektrichtung im emittierten Licht detektieren kann, die Emissionssteuereinheit die zweite Objektdetektionseinheit (12) so steuert, dass sie Licht in einer von der Objektrichtung um einen vorbestimmten Winkel abweichenden Richtung emittiert.

5. Objekterkennungsvorrichtung (100) wie in irgendeinem der Ansprüche 1 bis 4 beansprucht, bei der die zweite Objektdetektionseinheit (12) Licht mit einer periodischen Zeitgebung emittiert, während eine Emissionsrichtung geändert wird, und wenn die Verschwindedetektionseinheit (13) das Verschwinden detektiert, die zweite Objektdetektionseinheit (12) das Licht nicht zu einem Zeitpunkt zu emittieren des Lichts in der Objektrichtung benachbarten Zeitpunkt emittiert.

6. Objekterkennungsvorrichtung (100) wie in irgendeinem der Ansprüche 1 bis 4 beansprucht, bei der die zweite Objektdetektionseinheit (12) Licht mit einer periodischen Zeitgebung emittiert, während eine Emissionsrichtung geändert wird, und wenn die Verschwindedetektionseinheit (13) das Verschwinden detektiert, die zweite Objektdetektionseinheit (12) das Licht mit der periodischen Zeitgebung zusätzlich zu einer Zeitgebung zum emittieren von Licht in der Objektrichtung emittiert.

7. Objekterkennungsvorrichtung (100) wie in irgendeinem der Ansprüche 1 bis 6 beansprucht, bei der die erste Objektdetektionseinheit (11) die ersten Entfernungsinformationen und die zweiten Entfernungsinformationen basierend auf einer Mehrzahl an von der Stereokamera aufgenommenen Bildern erhält.

8. Objekterkennungsverfahren, enthaltend:

   Detektieren (S10) eines Objekts basierend auf einem Bild des Objekts, das von einer ersten Objektdetektionseinheit (11) aufgenommen worden ist, die eine Stereokameraentfernungsmesseinheit ist, die in einem Fahrzeug so eingebaut ist, dass sie ein Bild von wenigstens einem Frontbereich des Fahrzeugs aufnimmt, und Ausgeben erster Entfernungsinformationen, die eine Entfernung zu dem Objekt enthalten und erste Richtungsinformationen, die eine Richtung zu dem Objekt enthalten;

   Emittieren (S110) von Licht auf das Objekt und Detektieren des Objekts basierend auf reflektiertem Licht, das an dem Objekt reflektiert wird, durch eine zweite Objektdetektionseinheit (12), die eine Laserradarentfernungsmesseinheit ist, und Ausgeben zweiter Entfernungsinformationen, die eine Entfernung zu dem Objekt enthalten, und zweite Richtungsinformationen, die eine Richtung zu dem Objekt enthalten;

   Ausgeben, unter Verwendung einer Ausgabeeinheit (14), der ersten Entfernungsinformationen und der ersten Richtungsinformationen, wenn die ersten Entfernungsinformationen, die zweiten Entfernungsinformationen, die ersten Richtungsinformationen und die zweiten Richtungsinformationen erhalten werden;

   Detektieren (S20), unter Verwendung einer Verschwindedetektionseinheit (13), eines Verschwindens des Objekts, sobald das Objekt nicht mehr basierend auf den von der ersten Objektdetektionseinheit (11) aufgenommen Bild des Objekts detektiert werden kann; und

   Emittieren (S130) von Licht in einer Objektrichtung basierend auf den ersten Richtungsinformationen bevor das Verschwindend detektiert wurde und wenn das Verschwinden detektiert wird, wobei bei Detektion des Verschwindens eine Ausgabe der ersten Entfernungsinformationen und der zweiten Entfernungsinformationen beginnt, und wenn die erste Objektdetektionseinheit (11) das Objekt nicht mehr detektieren kann, nachdem die Ausgabeeinheit (14) mit dem Ausgeben der zweiten Entfernungsinformation und der zweiten Richtungsinformationen begann, die Ausgabeeinheit (14) mit einem Ausgeben der ersten Entfernungsinformationen und der ersten Richtungsinformationen beginnt.

**Revendications**

1. Appareil de reconnaissance d'objet (100), comprenant :

   une première unité de détection d'objet (11) étant une unité de réglage d'appareil photographique stéréoscopique conçue pour être installée dans un véhicule de manière à imager au moins une zone avant du véhicule et détecter un objet en fonction d'une image de l'objet capturée par l'appareil photographique stéréoscopique, et émettre des premières informations de distance comprenant une distance à l'objet et des premières informations de direction comprenant une direction vers l'objet ;

   une deuxième unité de détection d'objet (12) étant une unité de réglage de radar laser conçue pour émettre la lumière sur l'objet, détecter l'objet en fonction d'une lumière réfléchie au niveau de l'objet, et émettre des deuxièmes informations de distance comprenant une distance à l'objet et des deuxièmes informations de direction comprenant une direction vers l'objet ;

   une unité d'émission (14) conçue pour émettre les premières informations de distance et/ou les deuxièmes informations de distance et les premières informations de direction et/ou les deuxièmes informations de direction ; et

   une unité de détection de disparition (13) conçue pour détecter la disparition de l'objet lorsque la première unité de détection d'objet (11) devient incapable de détecter l'objet ; **caractérisé en ce que**

   l'unité d'émission (14) est conçue pour émettre les premières informations de distance et les premières informations de direction en cas de réception des premières informations de distance, des deuxièmes informations de distance, des premières informations de direction et des deuxièmes informations de direction ;

   l'appareil de reconnaissance d'objet comprenant en outre

   une unité de commande d'émission (31) conçue pour commander la deuxième unité de détection d'objet (12), au cas où l'unité de détection de disparition (13) détecte la disparition, pour émettre la lumière dans une direction d'objet en fonction des premières informations de direction avant que l'unité de détection de disparition (13) n'ait détecté la disparition,

lors de la détection de la disparition par l'unité de détection de disparition (13), l'unité d'émission (14) commençant à émettre les deuxièmes informations de distance et les deuxièmes informations de direction, et

lorsque la première unité de détection d'objet (11) devient capable de détecter l'objet après que l'unité d'émission (14) a commencé à émettre les deuxièmes informations de distance et les deuxièmes informations de direction, l'unité d'émission (14) commençant à émettre les premières informations de distance et les premières informations de direction.

2. Appareil de reconnaissance d'objet (100) tel que défini dans la revendication 1, dans lequel l'unité de détection de disparition détecte la disparition en fonction de valeurs de pixel dans une plage d'imagerie dans l'image de l'objet.

3. Appareil de reconnaissance d'objet (100) tel que défini dans la revendication 2, dans lequel l'unité de détection de disparition (13) détecte la disparition, au cas où une valeur de variance des valeurs de pixel dans la plage d'imagerie dans l'image de l'objet est inférieure ou égale à un seuil.

4. Appareil de reconnaissance d'objet (100) tel que défini dans l'une quelconque des revendications 1 à 3, dans lequel au cas où la deuxième unité de détection d'objet (12) ne peut pas détecter l'objet avec la lumière émise dans la direction d'objet, l'unité de commande d'émission commande la deuxième unité de détection d'objet (12) pour émettre la lumière dans une direction déviée de la direction d'objet d'un angle prédéterminé.

5. Appareil de reconnaissance d'objet (100) tel que défini dans l'une quelconque des revendications 1 à 4, dans lequel la deuxième unité de détection d'objet (12) émet la lumière selon une synchronisation périodique tout en changeant une direction d'émission et au cas où l'unité de détection de disparition (13) détecte la disparition, la deuxième unité de détection d'objet (12) n'émet pas de lumière selon une synchronisation adjacente à une synchronisation d'émission de lumière dans la direction d'objet.

6. Appareil de reconnaissance d'objet (100) tel que défini dans l'une quelconque des revendications 1 à 4, dans lequel la deuxième unité de détection d'objet (12) émet la lumière selon une synchronisation périodique tout en changeant une direction d'émission et au cas où l'unité de détection de disparition (13) détecte la disparition, la deuxième unité de détection d'objet (12) émet la lumière selon la synchronisation périodique, en plus d'une synchronisation d'émission de lumière dans la direction d'objet.

7. Appareil de reconnaissance d'objet (100) tel que défini dans l'une quelconque des revendications 1 à 6, dans lequel la première unité de détection d'objet (11) acquiert les premières informations de distance et les premières informations de direction en fonction d'une pluralité d'images capturées par l'appareil photographique stéréoscopique.

8. Procédé de reconnaissance d'objet, comprenant :

la détection (S10) d'un objet en fonction d'une image de l'objet capturée par une première unité de détection d'objet (11) étant une unité de réglage d'appareil photographique stéréoscopique installée dans un véhicule de manière à imager au moins une zone avant du véhicule, et émettre des premières informations de distance comprenant une distance à l'objet et des premières informations de direction comprenant une direction vers l'objet ;

l'émission (S110) de lumière sur l'objet et la détection de l'objet en fonction d'une lumière réfléchie au niveau de l'objet par une deuxième unité de détection d'objet (12) étant une unité de réglage de radar laser, et l'émission de deuxièmes informations de distance comprenant une distance à l'objet et de deuxièmes informations de direction comprenant une direction vers l'objet ;

l'émission, à l'aide d'une unité d'émission (14), des premières informations de distance et des premières informations de direction en cas de réception des premières informations de distance, des deuxièmes informations de distance, des premières informations de direction et des deuxièmes informations de direction ;

la détection (S20), à l'aide d'une unité de détection de disparition (13), de la disparition de l'objet lorsque l'objet devient incapable d'être détecté en fonction de l'image de l'objet capturée par la première unité de détection d'objet (11) ; et

l'émission (S310) de lumière, au cas où la disparition est détectée, dans une direction d'objet en fonction des premières informations de direction avant que la disparition n'ait été détectée,

lors de la détection de la disparition, les deuxièmes informations de distance et les deuxièmes informations de direction commençant à être émises, et

lorsque la première unité de détection d'objet (11) devient capable de détecter l'objet après que l'unité d'émission (14) a commencé à émettre les deuxièmes informations de distance et les deuxièmes informations de direction, l'unité d'émission (14) commençant à émettre les premières informations de distance et les premières informations de direction.

FIG.1B

FIG.1A

1001    1002

FIG.1C

1004    1003

# FIG.2A

TRAVELLING
IN TUNNEL

# FIG.2B

EXIT OF TUNNEL
APPEARS

RECOGNITION
OF
VEHICLE "A"
BECOMES
DIFFICULT

# FIG.2C

EMIT LASER
LIGHT IN THE
DIRECTION
VEHICLE "A"
HAD EXISTED

FIG.3

100

# FIG.4

# FIG.5

EP 2 910 971 B1

# FIG.6

EMISSION TIMING CONTROL UNIT  31

EMISSION TRIGGER SIGNAL

32

EMITTED LIGHT

33

TIME MEASURE-MENT UNIT  34

REFLECTED LIGHT FROM PHOTOGRAPHIC SUBJECT

RECEPTION TRIGGER SIGNAL

35
1D ARRAY TYPE LIGHT RECEPTION ELEMENT

36

# FIG.7

7002  7003

7004

33

# FIG.8

EP 2 910 971 B1

t2

DISTANCE L22
HORIZONTAL POSITION D22

DISTANCE L12
HORIZONTAL POSITION D12

t3

DISTANCE NULL
HORIZONTAL POSITION NULL

DISTANCE L13
HORIZONTAL POSITION D13

# FIG.9

| | OBJECT 1 | OBJECT 2 |
|---|---|---|
| t1 | DISTANCE L11<br>HORIZONTAL POSITION D11<br>RELATIVE VELOCITY V11<br>IMAGE POSITION 11<br>(x1,y1) (x2,y2) | DISTANCE L21<br>HORIZONTAL POSITION D21<br>RELATIVE VELOCITY V21<br>IMAGE POSITION 21<br>(x1,y1) (x2,y2) |
| t2 | DISTANCE L12<br>HORIZONTAL POSITION D12<br>RELATIVE VELOCITY V12<br>IMAGE POSITION 12<br>(x1,y1) (x2,y2) | DISTANCE L22<br>HORIZONTAL POSITION D22<br>RELATIVE VELOCITY V22<br>IMAGE POSITION 22<br>(x1,y1) (x2,y2) |
| t3 | DISTANCE L13<br>HORIZONTAL POSITION D13<br>RELATIVE VELOCITY V13<br>IMAGE POSITION 13<br>(x1,y1) (x2,y2) | DISTANCE NULL<br>HORIZONTAL POSITION NULL<br>RELATIVE VELOCITY NULL<br>IMAGE POSITION NULL |
| : | : | : |

FIG.10A

FIG.10B

FIG.10C

```
┌─────────────────────────────┐              ┌─────────────────────────┐
│     STEREO CAMERA           │              │    LASER RADAR          │
│     RANGING UNIT            │              │    RANGING UNIT         │
│ RECOGNITION DISAPPEARANCE   │              │                         │
│     DETECTION UNIT          │              │                         │
└─────────────────────────────┘              └─────────────────────────┘
```

S10

**RECOGNIZE OBJECT FROM IMAGE**

S20

**LOSE OBJECT?** — NO

YES — S30

**REQUIRE TO EMIT LASER LIGHT IN THE DIRECTION OF OBJECT**

S40

**OBJECT WHICH DISAPPEARED CAN BE RECOGNIZED?** — NO

YES — S50

**REQUIRE TO SELECT OBJECT DATA BY STEREO CAMERA RANGING UNIT**

S60

**REQUIRE TO STOP EMISSION OF LASER LIGHT IN THE DIRECTION OF OBJECT**

S110

**DETECT OBJECT BY EMITTING LASER LIGHT PERIODICALLY**

S120

**EMISSION OF LASER LIGHT IS REQUIRED?** — NO

YES — S130

**DETECT OBJECT BY EMITTING LASER LIGHT TO POINT OF DISAPPEARANCE IN ADDITION TO PERIODICAL EMITTING DIRECTION**

S140

**STOP OF EMISSION OF LASER LIGHT IS REQUIRED?** — NO

YES — S150

**EMISSION OF LASER LIGHT TO POINT OF DISAPPEARANCE IS STOPPED**

FIG.11

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013215804 A
- US 20140022388 A1

- JP 2014033078 A
- JP 2015030514 A

**Non-patent literature cited in the description**

- A collision mitigation system using laser scanner and stereovision fusion and its assessment. **R. LA-BAYRADE et al.** the Proceedings of the Intelligent Vehicles Symposium 2005. IEEE, 06 June 2005, 441-446